# EUROPEAN PATENT SPECIFICATION

(11) **EP 3 806 617 B1**
(45) Date of publication and mention of the grant of the patent: **25.05.2022**
(21) Application number: 18829300.5
(22) Date of filing: 17.12.2018
(51) Int. Cl.: A01G 25/16

(54) **IRRIGATION COMPUTER**
BEWÄSSERUNGSCOMPUTER
ORDINATEUR D'IRRIGATION

(30) Priority: 15.06.2018 DE 102018004762
(43) Date of publication of application: 21.04.2021
(73) Proprietor: HUSQVARNA AB, 561 82 Huskvarna (SE)
(72) Inventor: RENNER, Thomas, 89079 Ulm (DE)
(74) Representative: Finkele, Rolf
(86) International application number: PCT/EP2018/085231
(87) International publication number: WO 2019/238257

(56) References cited:
- CN-U- 202 617 879
- DE-A1-102007 061 770
- US-A1- 2015 081 117
- US-B2- 8 245 985

## Description

### TECHNICAL FIELD

The present disclosure relates to irrigation systems. More specifically, the present disclosure relates to an adjustable and user-friendly display for an irrigation computer of the irrigation systems.

### BACKGROUND

Irrigation systems are generally used for supplying water to plants, trees, grass etc. in application areas such as lawns, gardens or a balcony of a household. Generally, the irrigation systems utilize an irrigation computer along with a user interface (say a display) for ease of interaction with a user, such as for registering a command from the user for activation or deactivation of various functionalities and options of the irrigation systems.

However, there may be instances where the user interface may not be readily accessible to a user. This could lead to hardships in use of the irrigation systems. Further, it could make regular maintenance or replacement of the irrigation systems, specially the user interface, more cumbersome and less likely by a common user. So, there have been efforts to make the user interface more applicable for the common user. For instance, the user interface can be removably attached to the irrigation systems, however, there still remain constrains such as a poor line-of-sight (LOS) to the user interface among other shortcomings.

An example of an irrigation system is provided in U.S. patent application 8,245,985 (hereinafter referred to as '985 reference). The '985 reference provides a hose hanger device for use in combination with a water timer. The water timer includes a housing defining a hose support surface, and a receptacle sized to receive the base assembly of the water timer. An opening is defined in the front face of the housing to permit passage of the base assembly for placement within the receptacle. The receptacle supports the base assembly so that an input and display module may be removably mounted on the base assembly. However, the '985 reference comes short of providing adjustable and user-specific attachment of the display module in accordance with needs of the common user such as proper LOS to the display module, among other benefits.

Thus, there is a need for an improved and adjustable user interface for irrigation computers.

### SUMMARY

In view of the above, it is an objective of the present invention to solve or at least reduce the drawbacks discussed above. The objective is at least partially achieved by an irrigation computer. The irrigation computer includes a housing which encloses a plurality of control components. The irrigation computer includes a user interface which is coupled to the housing. The housing includes at least one first coupling member coupled to the housing. The user interface includes at least one second coupling member coupled to the user interface. The first coupling member is adapted to be coupled to the second coupling member. The irrigation computer is characterized in that the at least one first coupling member and the at least one second coupling member can be coupled to each other such that the user interface can be mounted in at least a first orientation, and a second orientation relative to the housing. Further, the user interface allows use of the irrigation computer in both the first orientation, and the second orientation. Thus, the present disclosure provides user-centered working of the user interface on account of selectively switchable-orientations for the same user-interface of the irrigation computer.

According to an embodiment of the present invention, the first coupling member includes two first coupling members. Number or size or location of the first coupling member will usually depend upon type or specification of the first coupling member or the second coupling member.

According to an embodiment of the present invention, the second coupling member includes two second coupling members. From symmetry considerations, number or size or location of the second coupling member will usually depend upon type or specification of the first coupling member or the second coupling member.

According to an embodiment of the present invention, changeover between the first orientation, and the second orientation is achieved by rotating the user interface by an angle of about 180 degrees in the same plane. This provides multiple orientations for use of the user interface to provide improved accessibility and line-of-sight (LOS) to the user interface leading to increased usability and applicability.

According to an embodiment of the present invention, the first coupling member and the second coupling member are connected by one or more of a pin, clip, slot, magnet and tab. This allows ease of coupling or decoupling of the user interface with the housing.

According to an embodiment of the present invention, the housing further includes multiple outlets. Number of the outlets are usually dependent upon the type of application especially total irrigation requirements of the irrigation system, among other factors.

According to an embodiment of the present invention, the irrigation computer further includes a control unit configured with the user interface. The control unit allows the user to make desired setting adjustments or mode changes to the irrigation computer.

Other features will be apparent from the following description and the accompanying drawings.

### BRIEF DESCRIPTION OF THE DRAWINGS

The invention will be described in more detail with reference to the enclosed drawings, wherein:
**FIG. 1** shows a perspective view of an irrigation computer, in accordance with an embodiment of the present invention;
**FIG. 2** shows a perspective view of the irrigation computer in an underground installation, in accordance with another embodiment of the present invention;
**FIG. 3** shows a rear perspective view of the irrigation computer, in accordance with another embodiment of the present invention;
**FIG. 4** shows a perspective view of a user interface detached from the irrigation computer, in accordance with another embodiment of the present invention;
**FIG. 5** shows a side view of the irrigation computer, in accordance with another embodiment of the present invention;
**FIG. 6** shows a side view of the irrigation computer, in accordance with another embodiment of the present invention; and
**FIG. 7** shows a side view of the irrigation computer, in accordance with another embodiment of the present invention;

### DESCRIPTION OF EMBODIMENTS

The present invention will be described more fully hereinafter with reference to the accompanying drawings, in which examples In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

In the drawings and specification, there have been disclosed preferred embodiments and examples. The scope of the invention is defined by the appended claims.

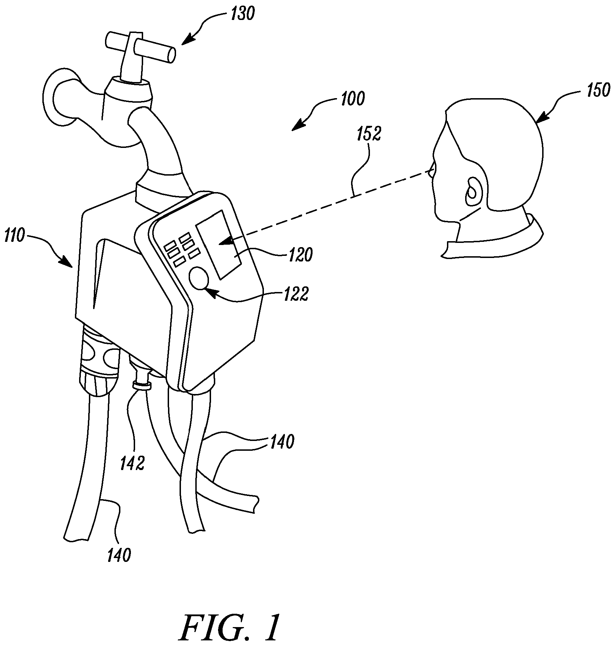

**FIG. 1** illustrates an irrigation computer 100. The irrigation computer 100 includes a housing **110** which encloses a plurality of control components (not shown). The irrigation computer **100** includes a user interface **120** which is coupled to the housing **110.** The user interface **120** is supplemented by a plurality of buttons **122** to assist in selecting any feature or mode by giving a command to the irrigation computer **100.** As illustrated in **FIG. 1****,** the irrigation computer **100** finds application with a tap **130** any other water source. Further, the irrigation computer **100** includes multiple outlets **140,** preferably around side opposite to the position of the tap **130.** The multiple outlets **140** are attached to the housing **110** by provision of coupling ports **142** attached to the housing **110.** Similar or different type of the coupling ports **142** may be provided for the tap **130** and the multiple outlets **140** depending upon type of application of the irrigation computer **100** along with preference of a user **150.** The user **150** can engage and input the command with the user interface **120** and thereby control the irrigation computer **100.** In this setting, the user **150** has a working line-of-sight (LOS) **152** of the irrigation computer **100** as well as the user interface **120** as desired for an efficient and easy operation of the irrigation computer **100.**

During implementation of the irrigation computer **100,** the user **150** makes use of the user interface **120** and/or the buttons **122** to provide the command. As used herein, the command can be any pre-stored or configurable setting, mode, feature, option presented by the user interface **120** (such as a display) of the irrigation computer **100.** The command may be used to start or stop the irrigation computer **100** or to simply provide calculated values of total running time or volume of fluid (or water) to be distributed by the irrigation computer **100.** As evident, the user interface **120** may be used to prompt any change in the command as could be required in case of any exigency or like event.

The irrigation computer **100** further includes a control unit (not shown) which can be configured with the user interface **120** and/or the buttons **122.** The control unit of the present disclosure can include one or more processor, ALU, timer, watch, calculator or any other state-of-the-art technology to cater to the type of application of the irrigation computer **100.**

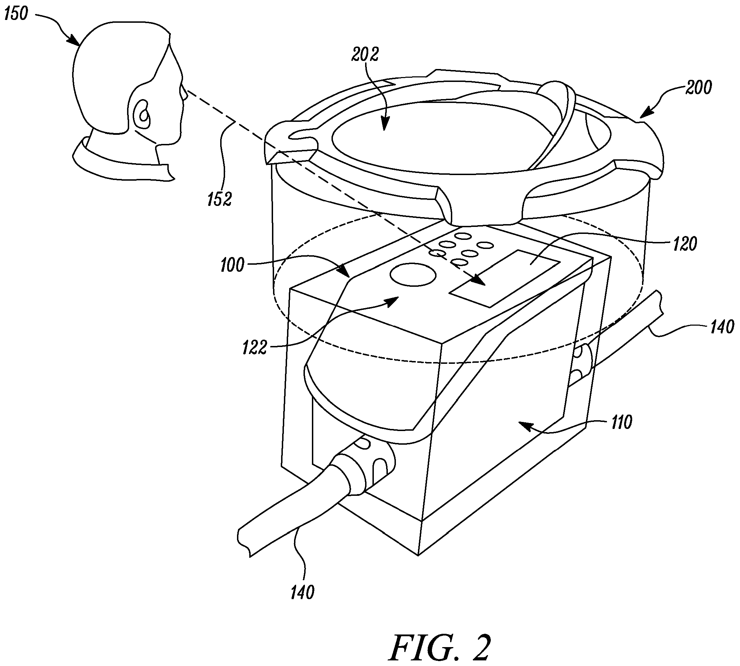

**FIG. 2** illustrates another application of the irrigation computer **100** where the irrigation computer **100** is placed below a floor **200** or ground. This arrangement has been shown for exemplary purposes only and shall be considered similar or equivalent to any situation where at least a part of the irrigation computer **100** is usually out of reach for the user **150.** However, the irrigation computer **100,** particularly the user interface **120,** can be accessed for effectuating any changes or maintenance purposes through an access tunnel **202** in the floor **200.** The present disclosure primarily aims to cater to such arrangements where there can be constraints with implementation of the irrigation computer **100** on account of any hindrance in the LOS **152** from the user **150** to the user interface **120** as best illustrated here.

In some cases, the user **150** may shift or change position with respect to the irrigation computer **100** to check on the user interface **120** or any buttons **122** of the irrigation computer **100.** But, this will not be a desirable and long-term solution for this problem. Thus, hindrance in the LOS **152** of the user **150** may lead to a less efficient implementation of the irrigation computer **100** among other associated drawbacks.

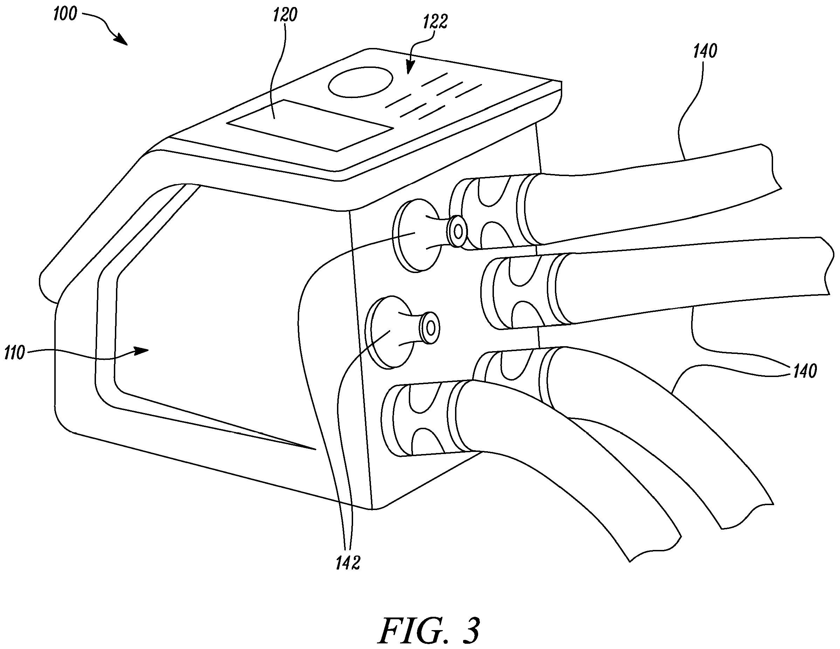

**FIG. 3** illustrates rear portion of the irrigation computer **100.** As illustrated, there can be any number of input such as the tap **130** (shown in FIG. 1) and any number of the outlets **140** depending upon factors such as, but not limited to, total irrigation requirements, life, capacity, size of the irrigation computer **100.** Likewise, the number of the coupling ports **142** can be removably attached to suit the requirements of the tap **130** and the outlets **140.** In some embodiments, there can be settings, preferably by means of the user interface **120,** to activate or deactivate one or more of the tap **130** and the outlets **140** in accordance with the requirement.

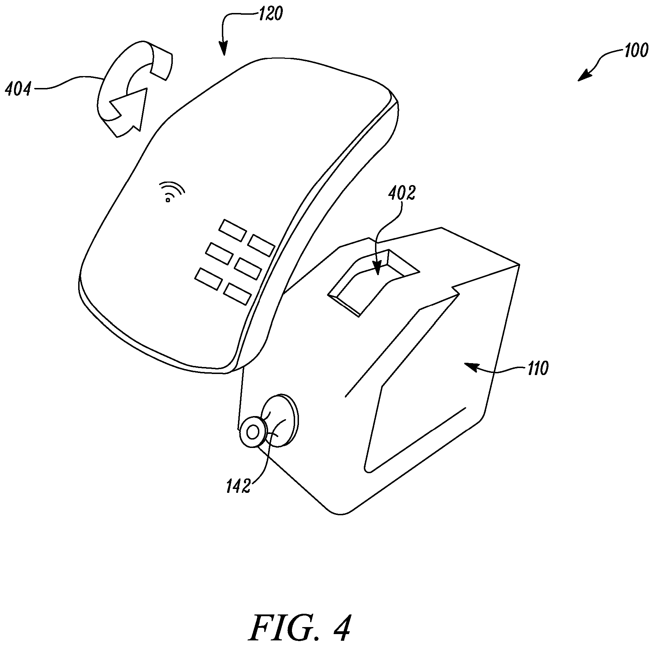

The present disclosure aims to provide an adjustable user interface **120** where the user interface **120** can be removably coupled as illustrated by **FIG. 4****.** The user interface **120** is illustrated as disassembled from the housing **110** of the irrigation computer **100** leaving behind a seat **402** of the housing **110.** Such disassembly can be warranted due to multiple factors such as maintenance, part change, or any other reason. Later, the user interface **120** can be reassembled to the seat **402** of the housing **110** as in same orientation or with change in the orientation as explained below. The change in the orientation can be effectuated by rotation (marked by **404)** of the user interface **120** as illustrated here.

The user interface **120** of the present disclosure can be a display means such as, but not limited to, LCD (liquid-crystal display), LED (light-emitting diode), OLED (organic light-emitting diode), POLED (plastic-OLED) or any other interface as known or implemented in the pertinent art. The present disclosure illustrates different profiles such as straight, curved designs of the user interface **120** while there can be many other profiles of the user interface **120** as known to a person having ordinary knowledge in the art. Preferably, the user interface **120** is expected to serve as a touch-cum-display based interface to cater to different needs of the user **150.** Further, choice of the user interface **120** will lie on the preference of the user **150** or application needs.

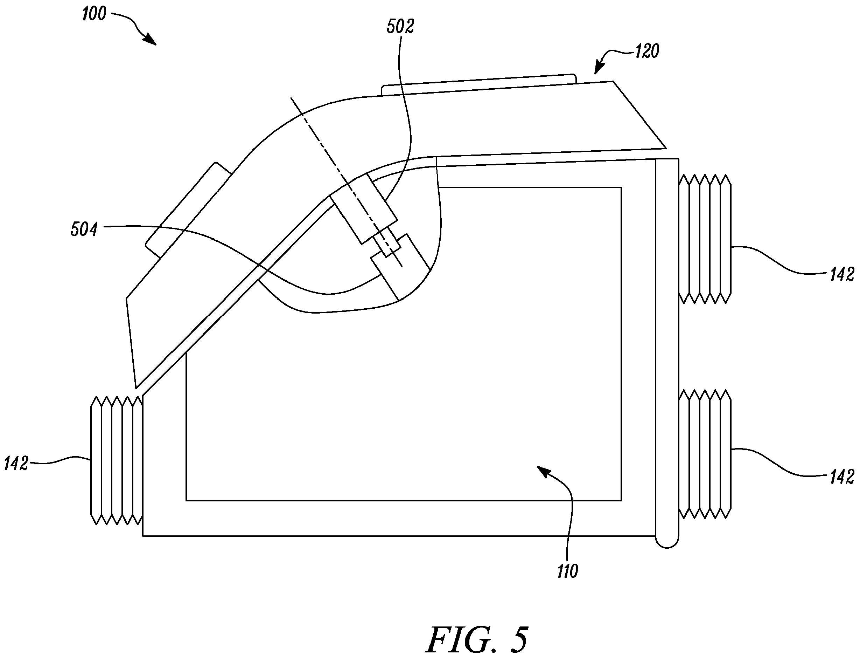

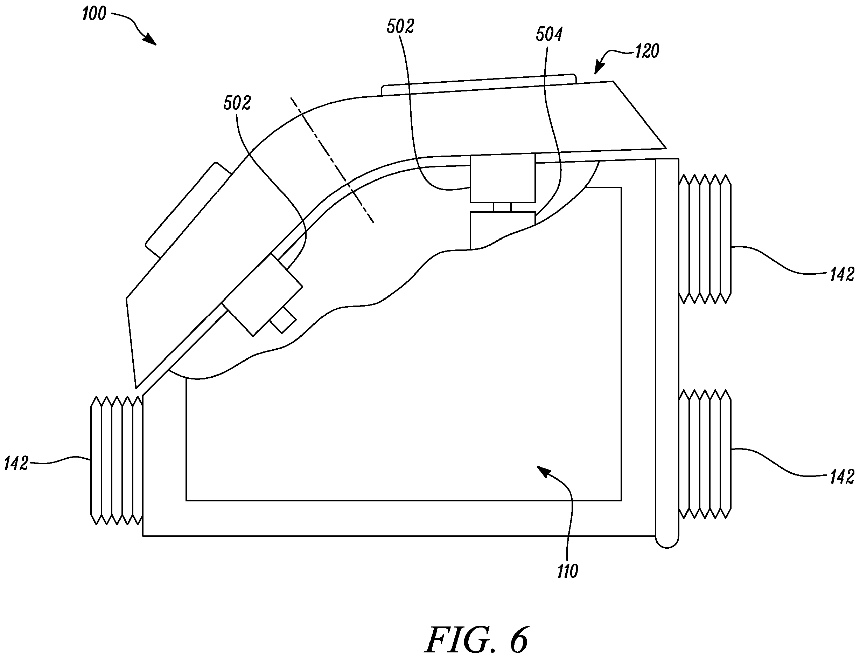

In some embodiments, **FIGS. 5** and **6** illustrate side views of the irrigation computer **100,** in accordance with different implementations of the present disclosure. The housing **110** includes at least one first coupling member **502** coupled to the housing **110.** Further, the user interface **120** includes at least one second coupling member **504** coupled to the user interface **120.** The first coupling member **502** is adapted to be coupled to the second coupling member **504.** These figures illustrate a coupled state of the user interface **120** with the housing **110.**

More particularly, **FIG. 5** shows only one pair of the first coupling member **502** coupled to the second coupling member **504** while **FIG. 6** shows two pairs of them. These different coupling may be warranted depending upon size, type, application of the user interface **120** and/or the irrigation computer **100** as the major factors, however, other user-dependent and independent factors have been contemplated and are well within the scope of the present disclosure. The irrigation computer **100** is characterized in that the first coupling member **502** and the second coupling member **504** are configured to be coupled to each other such that the user interface **120** can be mounted in at least a first orientation, and a second orientation relative to the housing **110.** The user interface **120** allows use of the irrigation computer **100** in both the first orientation, and the second orientation.

As illustrated in **FIG. 6****,** the first coupling member **502** includes two first coupling members **502** which have only one of the second coupling member **504** to engage, depending upon the orientation (whether the first orientation or the second orientation) of the user interface **120.** As illustrated, only one of the first coupling members **502** can engage with the second coupling member **504** for one orientation of the user interface **120.** However, the second coupling member **504** can also include two second coupling members **504** in some embodiments. From symmetry considerations, the second coupling member **504** can be equal in number with the first coupling member **502.** Moreover, number of first coupling members **502** and the second coupling member **504** will usually depend upon type/specification of the first coupling member **502** and/or the second coupling member **504,** among any other factor as known to a person having ordinary knowledge in the art.

Again, making reference to **FIG. 4****,** changeover between the first orientation, and the second orientation is achieved by rotating (as illustrated by **404)** the user interface **120** by an angle of about 180 degrees in the same plane. This provides multiple orientations for use of the user interface **120** to provide improved accessibility and implementation of the user interface **120.** Moreover, the present disclosure aims to provide different orientations namely the first orientation and the second orientation of the user interface **120** which can be offset at any angle (less or more than 180 degrees) from each other. For instance, the second orientation may be obtained by rotating the user interface **120** of the first orientation by any angle anywhere in the range of 0-180 degrees on either side (i.e. left or right) of the user interface **120.**

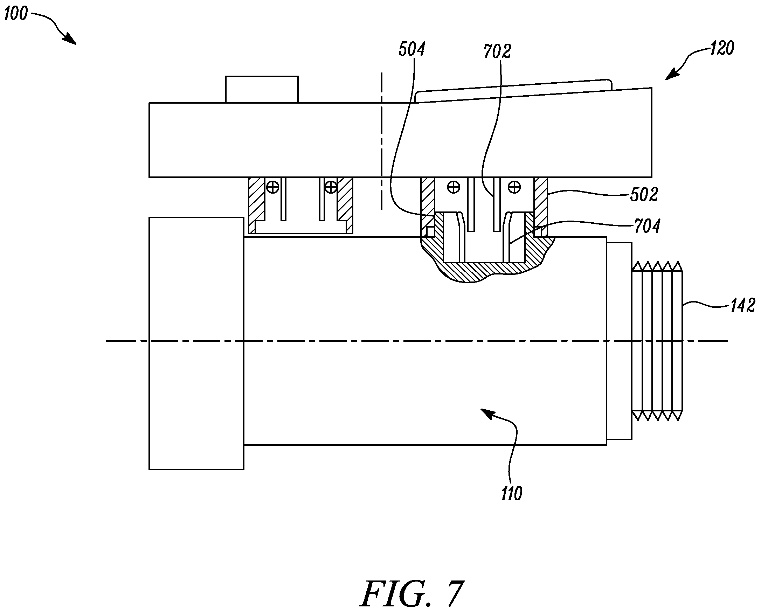

**FIG. 7** shows another embodiment in implementation of the irrigation computer **100.** Both of the first coupling members **502** shown have a first terminal **702** while the sole second coupling member **504** includes a second terminal **704.** During assembly, first terminal **702** of only one of the first coupling members **502** gets coupled with the second terminal **704** leading to a removable coupling of the user interface **120** with the housing **110.** As illustrated, the first coupling member **502** and the second coupling member **504** can be connected by one or more of pin, clip, slot, magnet and tab. This allows ease of coupling of the user interface **120** with the housing **110.**

Further, any of the first terminal **702** and the second terminal **704** may be positive (+) or negative (-) terminal depending upon the type of application among other factors. The present figure illustrates the first terminal **702** as the positive (+) terminal, however, this can be reversed. This embodiment can be more preferable for the irrigation computers **100** which find application in areas with space constrains, among other factors.

Moreover, provision of two first coupling members **502** for each second coupling member **504,** in accordance with some implementations of the present disclosure, lead to a more versatile and user-friendly operation of the irrigation computer **100.** This allows selective use of any of the two first coupling members **502** even if one of them remains unavailable due to any reason such as maintenance or end of life of any of the first coupling members **502** of the irrigation computer **100.**

### LIST OF ELEMENTS

- **100**: Irrigation Computer
- **110**: Housing
- **120**: User Interface
- **122**: Buttons
- **130**: Tap
- **140**: Cables
- **142**: Coupling Port
- **150**: User
- **152**: Line-Of-Sight
- **200**: Floor
- **202**: Access Tunnel
- **402**: Seat
- **404**: Rotation
- **502**: First Coupling Member
- **504**: Second Coupling Member
- **702**: First Terminal
- **704**: Second Terminal

## Claims

1. An irrigation computer **(100)** comprising:
a housing **(110)** configured to enclose a plurality of control components; and
a user interface **(120)** configured to be coupled to the housing **(110);**
the housing **(110)** includes at least one first coupling member **(502)** coupled to the housing **(110);** and
the user interface **(120)** includes at least one second coupling member **(504)** coupled to the user interface **(120),** wherein the first coupling member **(502)** is adapted to be coupled to the second coupling member **(504);**
the at least one first coupling member **(502)** and the at least one second coupling member **(504)** are configured to be coupled to each other such that the user interface **(120)** is mountable in at least a first orientation relative said housing,
**characterized in that** the user interface (120) is mountable in a second orientation relative to the housing **(110);**
wherein the user interface **(120)** allows use of the irrigation computer **(100)** in both the first orientation, and the second orientation.

2. The irrigation computer **(100)** of claim **1,** wherein the at least one first coupling member **(502)** includes two first coupling members **(502).**

3. The irrigation computer **(100)** of claim **1,** wherein the at least one second coupling member **(504)** includes two second coupling members **(504).**

4. The irrigation computer **(100)** of claim **1,** wherein changeover between the first orientation, and the second orientation is achieved by rotating the user interface **(120)** by an angle of about 180 degrees in the same plane.

5. The irrigation computer **(100)** of claim **1,** wherein the at least first coupling member **(502)** and the at least second coupling member **(504)** are connected by one or more of a pin, clip, slot, magnet and tab.

6. The irrigation computer **(100)** of claim **1,** wherein the housing **(110)** further includes multiple outlets **(140).**

7. The irrigation computer **(100)** of claim **1,** wherein the irrigation computer **(100)** further includes a control unit configured with the user interface **(120).**

## Patentansprüche

1. Bewässerungscomputer **(100),** umfassend:
ein Gehäuse **(110),** das so konfiguriert ist, dass es mehrere Steuerkomponenten umschließt; und
eine Benutzerschnittstelle **(120),** die dazu konfiguriert ist, mit dem Gehäuse **(110)** gekoppelt zu werden;
das Gehäuse **(110)** mindestens ein erstes Kopplungselement **(502)** enthält, das mit dem Gehäuse **(110)** gekoppelt ist; und
die Benutzerschnittstelle **(120)** mindestens ein zweites Kopplungselement **(504)** umfasst, das mit der Benutzerschnittstelle **(120)** gekoppelt ist, wobei das erste Kopplungselement **(502)** angepasst ist, um mit dem zweiten Kopplungselement **(504)** gekoppelt zu werden;
das mindestens eine erste Kopplungselement **(502)** und das mindestens eine zweite Kopplungselement **(504)** derart konfiguriert sind, dass sie miteinander gekoppelt sind, so dass die Benutzerschnittstelle **(120)** in mindestens einer ersten Ausrichtung relativ zu dem Gehäuse montierbar ist,
**dadurch gekennzeichnet, dass** die Benutzerschnittstelle **(120)** in einer zweiten Ausrichtung relativ zum Gehäuse **(110)** montierbar ist;
wobei die Benutzerschnittstelle **(120)** die Verwendung des Bewässerungscomputers **(100)** sowohl in der ersten Ausrichtung als auch in der zweiten Ausrichtung ermöglicht.

2. Bewässerungscomputer **(100)** nach Anspruch **1,** wobei das mindestens eine erste Kopplungselement **(502)** zwei erste Kopplungselemente **(502)** umfasst.

3. Bewässerungscomputer **(100)** nach Anspruch 1, wobei das mindestens eine zweite Kopplungselement **(504)** zwei zweite Kopplungselemente **(504)** umfasst.

4. Bewässerungscomputer **(100)** nach Anspruch **1,** wobei der Wechsel zwischen der ersten Ausrichtung und der zweiten Ausrichtung durch Drehen der Benutzerschnittstelle **(120)** um einen Winkel von ungefähr 180 Grad in derselben Ebene erreicht wird.

5. Bewässerungscomputer **(100)** nach Anspruch **1,** wobei das mindestens erste Kopplungselement **(502)** und das mindestens zweite Kopplungselement **(504)** durch einen oder mehrere Stifte, Clips, Schlitze, Magnete und Laschen verbunden sind.

6. Bewässerungscomputer **(100)** nach Anspruch **1,** wobei das Gehäuse **(110)** ferner mehrere Steckdosen **(140)** umfasst.

7. Bewässerungscomputer **(100)** nach Anspruch **1,** wobei der Bewässerungscomputer **(100)** ferner eine Steuereinheit umfasst, die mit der Benutzerschnittstelle **(120)** konfiguriert ist.

## Revendications

1. Ordinateur d'irrigation **(100)** comprenant :
un boîtier **(110)** configuré pour contenir une pluralité de composants de commande ; et une interface utilisateur **(120)** configurée pour être couplée au boîtier **(110)** ;
le boîtier **(110)** comprend au moins un premier élément de couplage **(502)** couplé au boîtier **(110)** ; et
l'interface utilisateur **(120)** comprend au moins un second élément de couplage **(504)** couplé à l'interface utilisateur **(120),** où le premier élément de couplage **(502)** est adapté pour être couplé au second élément de couplage **(504)** ;
l'au moins un premier élément de couplage **(502)** et l'au moins un second élément de couplage **(504)** sont configurés pour être couplés l'un à l'autre de sorte que l'interface utilisateur **(120)** puisse être montée selon au moins une première orientation par rapport audit boîtier,
**caractérisé en ce que** l'interface utilisateur (120) peut être montée dans une seconde orientation par rapport au boîtier **(110)** ;
où l'interface utilisateur **(120)** permet d'utiliser l'ordinateur d'irrigation **(100)** à la fois dans la première orientation et dans la seconde orientation.

2. Ordinateur d'irrigation **(100)** selon la revendication **1,** où l'au moins un premier élément de couplage **(502)** comprend deux premiers éléments de couplage **(502).**

3. Ordinateur d'irrigation **(100)** selon la revendication **1,** où l'au moins un second élément de couplage **(504)** comprend deux seconds éléments de couplage **(504).**

4. Ordinateur d'irrigation **(100)** selon la revendication **1,** où le changement entre la première orientation et la seconde orientation est réalisé en faisant tourner l'interface utilisateur **(120)** d'un angle d'environ 180 degrés dans le même plan.

5. Ordinateur d'irrigation **(100)** selon la revendication **1,** où l'au moins premier élément de couplage **(502)** et l'au moins second élément de couplage **(504)** sont connectés par un ou plusieurs éléments parmi une broche, un clip, une fente, un aimant et une languette.

6. Ordinateur d'irrigation **(100)** selon la revendication **1,** où le boîtier **(110)** comprend en outre des sorties multiples **(140).**

7. Ordinateur d'irrigation **(100)** selon la revendication **1,** où l'ordinateur d'irrigation **(100)** comprend en outre une unité de commande configurée avec l'interface utilisateur **(120).**
